# EUROPÄISCHE PATENTSCHRIFT

(11) **EP 0 512 157 B1**
(45) Veröffentlichungstag und Bekanntmachung des Hinweises auf die Patenterteilung: **05.07.1995**
(21) Anmeldenummer: 91119241.7
(22) Anmeldetag: 12.11.1991
(51) Int. Cl.: B01D 17/02

(54) **Abscheider**
Separator
Séparateur

(30) Priorität: 08.05.1991 DE 9105725 U
(43) Veröffentlichungstag der Anmeldung: 11.11.1992
(73) Patentinhaber: BASIKA ENTWÄSSERUNGEN GMBH, D-42111 Wuppertal (DE)
(72) Erfinder: Drecker, Rolf, W-5600 Wuppertal 1 (DE)
(74) Vertreter: Patentanwälte Dr. Solf & Zapf

(56) Entgegenhaltungen:
- EP-A- 0 276 861
- EP-A- 0 387 780
- FR-A- 2 474 328

## Beschreibung

Die Erfindung betrifft ein Verfahren zum Entleeren und Wiederbefüllen eines Fettabscheiders nach dem Oberbegriff des Anspruchs 1.

Die dabei verwendeten Abscheider sind zweischichtig arbeitende Abscheider, insbesondere gemäß DIN 4040 mit einem Zulaufraum, gegebenenfalls einem integrierten oder einem externen Schlammabscheideraum, einem Fettabscheideraum und einem eine untere Ablaufraumöffnung aufweisenden Ablaufraum, der zwischen dem Fettabscheideraum und dem Ablauf des Fettabscheiders angeordnet und durch eine Tauchwand vom Fettabscheideraum abgetrennt ist.

Aus der EP 0 387 780 A2 und der EP 0 276 861 A2 sind Flüssigkeitsabscheider bekannt, die einen Abscheideraum, eine Zulauföffnung, einen Ablaufraum, der mit dem Abscheideraum über eine untere Ablaufraumöffnung in Verbindung steht und eine weiter oben angeordnete Ablauföffnung aufweist, umfassen. Die Ablaufraumöffnung ist durch eine Absperreinrichtung verschließbar, wobei bei diesen bekannten Flüssigkeitsabscheidern die Ablaufraumöffnung durch ein Schwimmelement betätigt wird, das über eine Stange mit der Absperreinrichtung in Verbindung steht.

Fettabscheider sind regelmäßig zu entsorgen. Nach dem Entsorgen ist der Fettabscheidebehälter zunächst wieder mit Wasser zu befüllen, bevor der erneute Zulauf des fetthaltigen Abwassers beginnt. Sofern Trinkwasser dazu verwendet wird, ist nach DIN 1988 vorgeschrieben, eine sogenannte Freifallstrecke vorzusehen, was die Wiederbefüllanlage verkompliziert. Außerdem ist die Verwendung von Trinkwasser zum Wiederbefüllen relativ teuer.

Im DE-GM 90 03 226 wird gefordert, dem Abscheider einen Sammelbehälter für gereinigtes Wasser nachzuschalten und den Sammelbehälter mit einer Pumpenanlage und einem zusätzlichen Füllanschluß mit Freifallstrecke für Frischwasser auszurüsten. Eine solche Anlage reduziert zwar den Frischwasserverbrauch, ist aber sehr aufwendig und erfordert erheblichen Bauraum.

Aufgabe der Erfindung ist, das Verfahren zum Entleeren und Wiederbefüllen eines Fettabscheiders erheblich zu vereinfachen.

Diese Aufgabe wird durch die Merkmale des Anspruchs 1 gelöst. Vorteilhafte Weiterbildungen der Erfindung werden in den Unteransprüchen gekennzeichnet. Anhand der in der Zeichnung dargestellten Beispiele wird die Erfindung im folgenden näher erläutert. Es zeigen:
- Fig. 1 bis 3: schematisch und in der Seitenansicht Fettabscheider mit verschiedenen Absperreinrichtungen für den Ablaufraum, und
- Fig. 4 bis 6: schematisch eine weitere Ausführungsform der Absperreinrichtung in Seitenansicht (Fig. 4 und 5) sowie in Draufsicht.

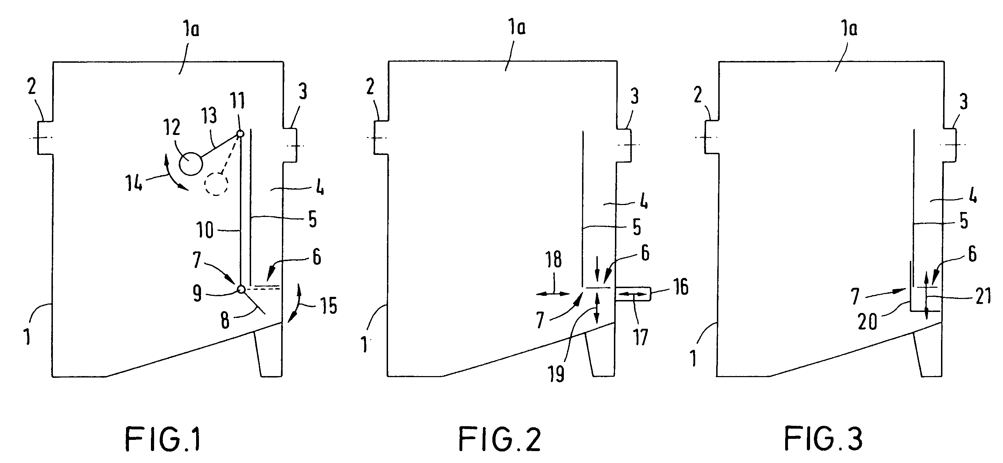

Vom üblicherweise aufgebauten Fettabscheider mit Durchlauf-Funktion ist in den Fig. 1 bis 3 lediglich der Abscheidebehälter 1 mit dem Fettabscheideraum 1a, der Zulauf 2 und der Ablaufraum 4 mit Ablauf 3 und Tauchwand 5 dargestellt. Alle übrigen üblichen Bestand- bzw. Bauteile eines Fettabscheiders sind nicht abgebildet, weil sie für das Verständnis der Erfindung unwesentlich sind.

Wesentlich ist, daß die in Bodennähe des Abscheidebehälter 1 vorgesehene Ablaufraumöffnung 6 mit einer Absperreinrichtung 7 ausgerüstet ist, die selbsttätig, z.B. motorisch, betätigbar ausgebildet ist. Mit dieser Absperreinrichtung 7 kann die Öffnung 6 abgedichtet bzw. verschlossen werden.

Aufgrund der Absperreinrichtung 7 erübrigt sich ein Wiederbefüllen des Fettabscheiders nach der Entsorgung und bevor der Zulauf 2 wieder geöffnet wird. Bei verschlossener Ablaufraumöffnung 6 kann der Zulauf 2 nach dem Entleeren des Fettabscheideraums 1a wieder geöffnet und das Abwasser in den Behälter 1 eingelassen werden, bis der Abwasserspiegel höher gestiegen ist als die Ablaufraumöffnung 6 positioniert ist. Danach kann die Absperreinrichtung 7 betätigt und die Ablaufraumöffnung 6 wieder freigegeben werden. Der richtige Zeitpunkt für das Öffnen der Ablaufraumöffnung 6 kann durch Füllstandanzeiger (nicht dargestellt) angezeigt werden; Schaltelemente mit Stellelementen (nicht dargestellt) verstellen dann die Absperreinrichtung 7.

Nach einer einfachen und zweckmäßigen Ausführungsform der Erfindung (Fig. 1) weist die Absperreinrichtung 7 eine z.B. an der Tauchwand 5 gelenkig angeordnete Absperrklappe 8 auf, deren Form und Größe so gewählt ist, daß sie die Ablaufraumöffnung 6 versperren kann. Die Absperrklappe 8 steht mit einem am unteren Gelenk 9 angeordneten, nach oben gerichteten Gestänge 10 in Verbindung, das an einem oberen, z.B. der Tauchwand 5 sitzenden Gelenk 11 endet. Am oberen Gelenk 11 ist ein Schwimmer 12 mit Schwimmersteg 13 befestigt. Der Schwimmer 12 mit Schwimmersteg 13 ist in Doppelpfeilrichtung 14 schwenkbar, wobei die Schwenkbewegung in an sich bekannter Weise mit einer entsprechenden Hebeleinrichtung (nicht dargestellt) auf das Betätigungsgestänge 10 übertragen wird, das wiederum über eine entsprechende Hebelanordnung (nicht dargestellt) die Schwenkbewegung der Absperrklappe 8 in Doppelpfeilrichtung 15 bewirkt. Die Absperrklappe 8 ist nach dem Entleeren des Abscheidebehälter 1 gegen die Ablaufraumöffnung 6 gedrückt; der Schwimmer 12 befindet sich in der unteren Stellung (gestrichelt gezeichnete Darstellung). Der Zulauf 2 kann geöffnet werden; das Abwasser steig im Fettabscheideraum 1a auf, kann jedoch noch nicht in den Ablaufraum 4 gelangen. Wenn das Abwasser den Schwimmer 12 erreicht und höher steigt, wird der Schwimmer 12 mit Schwimmerstange 13 verschwenkt bzw. geöffnet, so daß fettfreies Abwasser in den Ablaufraum 4 gelangt und der Fettabscheider seine Durchlauf-Funktion aufnimmt. Das Gelenk 9 kann auch an der Rückwand des Fettabscheideraums angeordnet sein, so daß die freie Endkante der Klappe 8 über die Tauchwand 5 hinausragt (nicht dargestellt). An der freien Endkante ist in diesem Fall gelenkig das Gestänge 10 angeordnet.

Anstelle einer mit einem Schwimmer betätigten Klappe 8 kann man motorisch betriebene Klappen oder Schieber als Absperreinrichtung gemäß den Fig. 2 und 3 verwenden.

In Fig. 2 ist ein Schieber 16 angedeutet, der in horizontaler Richtung (Doppelpfeil 17) verschiebbar ist. Ein solcher Schieber kann auch gemäß Doppelpfeilrichtungen 18,19 verschiebbar angeordnet und entweder von Hand oder motorisch oder magnetisch antreibbar ausgebildet sein (nicht dargestellt).

In Fig. 3 ist eine Absperrglocke 20 angedeutet, die von Hand oder motorisch oder magnetisch in Doppelpfeilrichtung 21 verschiebbar eingerichtet ist.

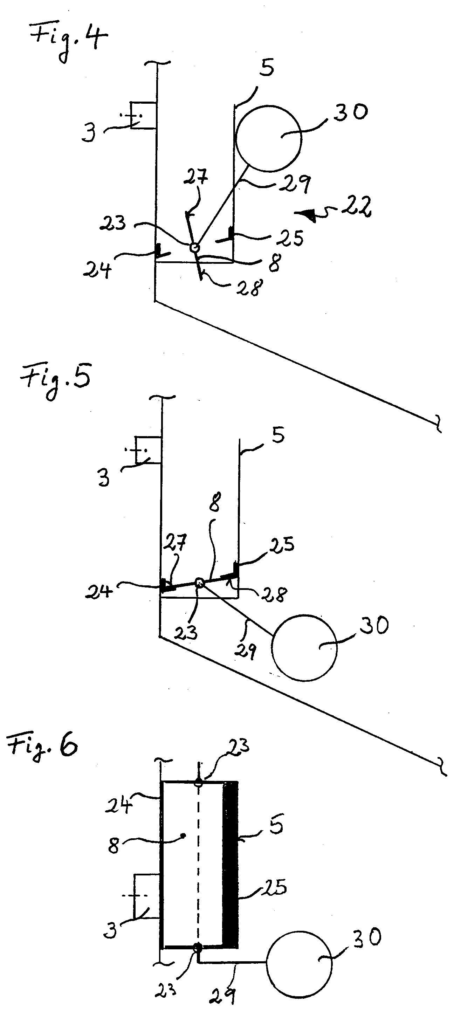

In den Fig. 4 bis 6 ist eine weitere bevorzugte Variante der Absperreinrichtung gezeigt, die sich durch einen besonders einfachen und funktionstüchtigen Aufbau auszeichnet. Erreicht wird dies dadurch, daß die Absperrklappe 8 starr mit einer Schwimmereinrichtung 22 verbunden ist, wodurch ein Steuergestänge wie in Fig. 1 entfallen kann.

Die Absperrklappe 8 ist bei dieser Variante der Absperreinrichtung in Art eines Schwingdeckels ausgelegt, vermag also nur um eine Achse, im dargestellten Ausführungsbeispiel um die Längsmittelachse 23 zu verschwenken oder zu schwingen. Aufgrund dieser Schwinglagerung befindet sich also stets eine der beiden Absperrklappen-Längskanten 24, 25 über der anderen Längskante, abgesehen von der "Gleichgewichtslage" der Absperrklappe 8, die beim gezeigten Ausführungsbeispiel niemals eingenommen wird, weil einander gegenüberliegende, an der Fettabscheiderrückwand 26 und an der Tauchwand 5 angeordnete Anschlagkisten 27 und 28 nicht unterschiedliche Höhenpositionen einnehmen, so daß die Absperrklappen-Längskante 24 bzw. 25 an der Anschlagkiste 27 bzw. 28 zur Anlage kommt, während die Absperrklappe 8 noch eine leicht schräge Position einnimmt, die von der Horizontalen abweicht. Alternativ hierzu können die Anschlagleisten 27 und 28 auch so angeordnet sein, daß die Absperrklappe 8 in der Schließstellung, in der ihre Längskante 24, 25 im Eingriff mit den Anschlagleisten 27,28 stehen, im wesentlichen waagrecht ausgerichtet ist. Die Anschlagleisten 27, 28 erstrecken sich über die gesamte Länge der Absperrklappe 8, um deren Dichtungs- oder Absperrwirkung zu gewährleisten.

Die Schwimmereinrichtung 22 ist also starr mit der Absperrklappe 8 verbunden. Zu diesem Zweck ist die Schwimmerstange 29, deren eines Ende den Schwimmer 30 trägt, fest mit der Absperrklappe 8 verbunden, und zwar in unmittelbarer Nähe der Absperrklappen-Schwenk- oder Schwingachse 23 bzw. direkt mit dieser. Die Schwimmerstange 29 verläuft unter einen vorgegebenen Winkel zur Absperrklappe 8, der so gewählt ist, daß der Schwimmer 30 bei vollständig geöffneter Absperrklappe 8 bei gefülltem Fettabscheideraum an der diesem zugewandten Seite der Tauchwand 5 oberhalb der Leisten 27, 28 zur Anlage gelangt, während der Schwimmer 30 bei vollständig geschlossener Absperrklappe 8 unterhalb dieser zu liegen kommt und dadurch die Längskanten 24, 25 gegen die Leisten 27, 28 preßt und einen hinreichenden Verschluß des Ablaufraums 4 sicherstellt.

Aus der Draufsicht von Fig. 6 geht hervor, daß die Schwimmerstange 29 im Bereich einer Schmalseite der Absperrklappe 8 an dieser befestigt ist.

Die Fig. 1 bis 5 zeigen beispielhaft Absperreinrichtungen 7. Der Fachmann wird nach Kenntnis der vorliegenden Erfindung weitere Absperreinrichtungen auffinden können, wenn er von der verblüffend einfachen Lösung erfährt, bei einem Fettabscheider ohne Nachfülleinrichtungen auszukommen. Die Erfindung schließt nicht aus, Nachfülleinrichtungen in Kombination mit der erfindungsgemäßen Absperreinrichtung zu verwenden, weil auch die Kombination erhebliche Vereinfachungen beim Betrieb eines Fettabscheiders bringt.

## Patentansprüche

1. Verfahren zum Entleeren und Wiederbefüllen eines Fettabscheiders, der ein zweischichtig arbeitender Abscheider ist, der aus einem Fettabscheideraum mit einer Abwasserzulauföffnung und einem durch eine Tauchwand getrennten Ablaufraum mit einer Ablauföffnung für gereinigtes Wasser besteht, wobei der Fettabscheideraum und der Ablaufraum durch eine unten angeordnete Ablaufraumöffnung miteinander verbunden sind und die Ablaufraumöffnung durch eine Absperreinrichtung verschließbar ist, wobei zur regelmäßigen Entsorgung der Fettschicht der Fettabscheider entleert und anschließend wieder befüllt wird, und die Absperreinrichtung auch beim Entleeren des Fettabscheiders bis zur vollständigen Entleerung des Ablaufraums geöffnet bleibt, und vor dem Wiederbefüllen die Ablaufraumöffnung mit der Absperreinrichtung verschlossen wird, anschließend fetthaltiges Abwasser durch die Zulauföffnung des Fettabscheiders zum Wiederbefüllen eingelassen wird und die Ablaufraumöffnung erst geöffnet wird, wenn der Abwasserspiegel im Fettabscheideraum oberhalb der Ablaufraumöffnung liegt.

2. Fettabscheider zur Verwendung im Verfahren nach Anspruch 1, der ein zweischichtig arbeitender Abscheider ist, der aus einem Fettabscheideraum (1a) mit einer Abwasserzulauföffnung und einem durch eine Tauchwand (5) getrennten Ablaufraum (4) mit einer Ablauföffnung für gereinigtes Wasser besteht, wobei der Fettabscheideraum und der Ablaufraum durch eine unten angeordnete Ablaufraumöffnung (6) miteinander verbunden sind, und die Ablaufraumöffnung (6) durch eine Absperreinrichtung (7) verschließbar ist, und die Absperreinrichtung (7) in Abhängigkeit vom Füllstand im Fettabscheideraum (1a) selbsttätig arbeitend eingerichtet ist.

3. Fettabscheider nach Anspruch 2,
dadurch **gekennzeichnet,**
daß die Absperreinrichtung (7) motorisch betätigbar eingerichtet.

4. Fettabscheider nach Anspruch 2 oder 3,
dadurch **gekennzeichnet,**
daß eine Absperreinrichtung (7) eine schwenkbare Absperrklappe (8) aufweist.

5. Fettabscheider nach einem oder mehreren der Ansprüche 2 bis 4,
dadurch **gekennzeichnet,**
daß die Absperreinrichtung (7) einen Absperrschieber (16) aufweist.

6. Fettabscheider nach Anspruch 2 oder 3,
dadurch **gekennzeichnet,**
daß die Absperreinrichtung (7) eine Absperrglocke (20) aufweist.

7. Fettabscheider nach Anspruch 2 oder 4,
dadurch **gekennzeichnet,**
daß die Absperrklappe (8) über ein unteres Gelenk (9) schwenkbar an der Tauchwand (5) oder an der Rückwand des Fettabscheideraums (1a) angeordnet ist.

8. Fettabscheider nach Anspruch 7,
**gekennzeichnet** durch
eine Schwimmeinrichtung als Betätigungseinrichtung für die Absperrklappe (8).

9. Fettabscheider nach Anspruch 8,
dadurch **gekennzeichnet,**
daß die Schwimmeinrichtung ein am unteren Gelenk (9) an einem an der Tauchwand (5) sitzenden oberen Gelenk (11) angeordnetes Gestänge (10) aufweist.

10. Fettabscheider nach Anspruch 9,
dadurch **gekennzeichnet,**
daß am oberen Gelenk (11) eine Schwimmerstange (13) mit einem Schwimmer (12) angeordnet ist und die Schwimmerstange (13) über eine entsprechende Hebelanordnung mit dem Gestänge (10) in Verbindung steht, das seinerseits über eine entsprechende Hebelanordnung die Absperrklappe (8) betätigt.

11. Fettabscheider nach Anspruch 2 oder 4,
dadurch **gekennzeichnet,**
daß die Absperrklappe (8) in Art eines Schwingdeckels derart um eine Achse (23) schwenkbar ist, daß von beidseits der Schwenkachse (23) einander gegenübergelegenen Kantenbereichen (27, 28) bei der Schwingbewegung der Absperrklappe (8) ein Kantenbereich über dem jeweils anderen gelegenen ist.

12. Fettabscheider nach Anspruch 11,
dadurch **gekennzeichnet,**
daß eine Schwimmereinrichtung (22) als Betätigungseinrichtung für die Absperrklappe (8) vorgesehen ist.

13. Fettabscheider nach Anspruch 12,
dadurch **gekennzeichnet,**
daß eine Schwimmereinrichtung (22) einen Schwimmer (30) und eine fest mit diesem verbundene Schwimmerstange (29) umfaßt, die fest mit der Absperrklappe (8) verbunden ist.

14. Fettabscheider nach Anspruch 13,
dadurch **gekennzeichnet,**
daß die Schwimmerstange (29) im Bereich der Absperrklappen-Schwenkachse mit der Absperrklappe (8) verbunden ist.

15. Fettabscheider nach einem der Ansprüche 11 bis 14,
dadurch **gekennzeichnet,**
daß an der Tauchwand (5) und der Rückwand des Fettabscheiders bzw. an zwei einander gegenüberliegenden Seitenwänden des Fettabscheideraums Anschlagmittel (24, 25) vorgesehen sind, mit denen die beidseits der Absperrklappen-Schwenkachse (29) liegenden Absperrklappen-Kantenbereiche (27, 28) in Eingriff gelangen, um die Schließstellung der Absperrklappe (8) festzulegen.

## Claims

1. Method for emptying and refilling a fat separator which is a separator functioning in two layers comprising a fat separating space with a waste water inlet opening and an outlet space separated by an immersed wall with an outlet opening for purified water wherein the fat separating space and the outlet space are joined together by an outlet space opening located beneath and the outlet opening can be closed by means of a closure device, wherein for regular disposal of the fat layer the fat separator is emptied and then refilled and the closure device remains open during emptying of the fat separator until the outlet space has been completely emptied and the outlet space is sealed off by means of the closing device before refilling, and then fat-containing waste water is allowed to refill the fat separator through the inlet opening and the outlet space opening is only opened when the surface of the waste water in the fat separator space lies above the outlet space opening.

2. A fat separator for implementing the method according to claim 1, which is a separator operating with two layers comprising a fat separating space (1) with a waste water inlet opening and an outlet space (4) separated by means of an immersed wall (5) with an outlet opening for purified water, wherein the fat separating space and the outlet space are joined together by an outlet space opening (6) located beneath and the outlet space opening (6) can be closed off by means of a closure device (7), and the closure device (7) is equipped so as to operate automatically depending upon the amount by which the fat separating space (1a) is filled.

3. A fat separator according to claim 2,
characterised in that the closure device (7) is equipped so as to be operated by a motor.

4. A fat separator according to claim 2 or 3,
characterised in that a closure device (7) has a swivelling valve (8).

5. A fat separator according to one or more of claims 4,
characterised in that the closure device (7) has an obstructing disk (16).

6. A fat separator according to claim 2 or 3,
characterised in that the closure device (7) has an obstructing bell (20).

7. A fat separator according to claim 2 or 4,
characterised in that the closure valve (8) is arranged so as to swivel on the immersed wall (5) or on the back wall of the fat separator space (1a) by means of a lower pivot (9).

8. A fat separator according to claim 7,
characterised in that a float device is used as an operating device for the closure valve (8).

9. A fat separator according to claim 8,
characterised in that the float device has a rod (10) running from a lower pivot (9) to an upper pivot (11) located on the immersed wall (5).

10. A fat separator according to claim 9,
characterised in that a float rod (13) with a float (112) is mounted on the upper pivot (11) and the float rod (13) is connected to the rod (10) by means of a corresponding lever arrangement which in turn operates closure valve (8) by means of a corresponding lever arrangement.

11. A fat separator according to claims 2 or 4,
characterised in that the closure valve (8) can pivot about an axis (23) in the form of a pivoting cover so that edge regions (27, 28) located on either side of the pivot axis (23) are both covered in the pivoting movement of the closure valve (8).

12. A fat separator according to claim 11,
characterised in that a float device (22) is provided as a means for operating the closure valve (8).

13. A fat separator according to claim 12,
characterised in that a float device (22) incorporates a float (30) and a float rod (29) firmly attached thereto which is firmly attached to the closure valve (8).

14. A fat separator according to claim 13,
characterised in that the float rod (29) is attached to the closure valve (8) in the vicinity of the closure valve pivot axis.

15. A fat separator according to one of claims 11 to 14,
characterised in that stop means (24, 25) are provided on the immersed wall (5) and the back wall of the fat separator and on two opposite side walls of the fat separator space which are engaged by the edge portions (27, 28) of the closure valve lying on either side of the closure valve pivot axis (29) in order to form the closed position of the closure valve (8).

## Revendications

1. Procédé de vidange suivi du remplissage d'un séparateur de matières grasses du type fonctionnant à deux temps et comportant un espace de séparation des matières grasses avec une ouverture d'admission des eaux usées, et un espace d'évacuation séparé par une paroi plongeuse et muni d'une ouverture d'évacuation de l'eau nettoyée, l'espace de séparation des matières grasses et l'espace d'évacuation étant reliés entre eux par une ouverture disposée en bas de l'espace d'évacuation, ladite ouverture pouvant être fermée par un moyen d'arrêt, le séparateur de matières grasses étant vidé, puis à nouveau rempli en vue d'enlever régulièrement la couche de matières grasses, le moyen d'arrêt restant ouvert lors de la vidange du séparateur jusqu'à la vidange complète de l'espace d'évacuation, l'ouverture de l'espace d'évacuation étant fermée par le moyen d'arrêt avant un nouveau remplissage, de l'eau usée contenant des matières grasses étant ensuite introduite par l'ouverture d'admission du séparateur pour remplir de nouveau celui-ci, et l'ouverture de l'espace d'évacuation n'étant ouverte que lorsque le niveau d'eau usée dans l'espace de séparation des matières grasses est situé au-dessus de l'ouverture de l'espace d'évacuation.

2. Séparateur de matières grasses pour la mise en oeuvre du procédé selon la revendication 1, du type fonctionnant à deux temps et comportant un espace de séparation des matières grasses (1a) avec une ouverture d'admission d'eau usée, et un espace d'évacuation (4) séparé par une paroi plongeuse (5) et muni d'une ouverture d'évacuation de l'eau nettoyée, l'espace de séparation des matières grasses et l'espace d'évacuation étant reliés entre eux par une ouverture (6) disposée en bas de l'espace d'évacuation, ladite ouverture (6) pouvant être fermée par un moyen d'arrêt, ce moyen d'arrêt (7) fonctionnant automatiquement en fonction de l'état de remplissage de l'espace de séparation des matières grasses (1a).

3. Séparateur selon la revendication 2,
caractérisé en ce que le moyen d'arrêt (7) peut être actionné par un moteur.

4. Séparateur selon la revendication 2 ou 3,
caractérisé en ce qu'un moyen d'arrêt (7) présente un clapet d'arrêt (8) qu'on peut faire pivoter.

5. Séparateur selon l'une ou plusieurs des revendications 2 à 4,
caractérisé en ce que le moyen d'arrêt (7) présente un coulisseau d'arrêt (16).

6. Séparateur selon la revendication 2 ou 3,
caractérisé en ce que le moyen d'arrêt (7) présente une cloche d'arrêt (20).

7. Séparateur selon la revendication 2 ou 4,
caractérisé en ce que le clapet d'arrêt (8) est monté pivotant au moyen d'une articulation inférieure (9), sur la paroi plongeuse (5) ou sur la paroi postérieure de l'espace de séparation (1a).

8. Séparateur selon la revendication 7,
caractérisé par un dispositif flotteur servant de dispositif d'actionnement du clapet d'arrêt (8).

9. Séparateur selon la revendication 8,
caractérisé en ce que le dispositif flotteur présente une tubulure (10) disposée sur l'articulation inférieure (9) et reliée à une articulation supérieure (11) disposée sur la paroi plongeuse (5).

10. Séparateur selon la revendication 9,
caractérisé en ce que, sur l'articulation supérieure (11) est disposée une tige (13) avec un flotteur (12), la tige (13) étant reliée à la tubulure (10) par un agencement approprié à levier(s), la tubulure actionnant à son tour le clapet d'arrêt au moyen d'un agencement approprié à levier(s).

11. Séparateur selon la revenedication 2 ou 4,
caractérisé en ce que le clapet d'arrêt (8) peut pivoter à la manière d'un capot oscillant autour d'un axe (23), de manière à ce qu'une de deux régions de bord (27, 28) situées en regard des deux côtés de l'axe de pivotement (23) soit respectivement située au-dessus de l'autre lors d'un mouvement oscillant du clapet d'arrêt (8).

12. Séparateur selon la revendication 11,
caractérisé en ce qu'un dispositif flotteur (22) est prévu en tant que dispositif d'actionnement du clapet d'arrêt (8).

13. Séparateur selon la revendication 12,
caractérisé en ce qu'un dispositif flotteur (22) comporte un flotteur (30) et une tige (29) solidarisée avec celui-ci, cette tige étant en outre solidarisée avec le clapet d'arrêt (8).

14. Séparateur selon la revendication 13,
caractérisé en ce que la tige de flotteur (29) est reliée au clapet d'arrêt (8) dans la région de l'axe de pivotement dudit clapet.

15. Séparateur selon l'une des revendications 11 à 14,
caractérisé en ce que des moyens de butée (24, 25) sont prévus sur la paroi plongeuse (5) et la paroi postérieure du séparateur ou sur deux parois latérales disposées en regard de l'espace de séparation, ces moyens de butée coopérant avec les régions du bord (27, 28) situées des deux côtés de l'axe de pivotement (23) du clapet d'arrêt pour définir la position de fermeture du clapet d'arrêt (8).
